(19)

Europäisches
Patentamt
European
Patent Office
Office européen
des brevets

(11) **EP 3 275 959 A1**

(12) **EUROPEAN PATENT APPLICATION**

(43) Date of publication:
**31.01.2018 Bulletin 2018/05**

(51) Int Cl.:
***C09J 11/06*** *(2006.01)*

(21) Application number: **17183502.8**

(22) Date of filing: **27.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.07.2016 JP 2016148907**

(71) Applicant: **Nitto Denko Corporation
Ibaraki-shi, Osaka (JP)**

(72) Inventors:
• **FUNAKOSHI, Yoshio
Ibaraki-shi, Osaka (JP)**
• **HAMADA, Atsushi
Ibaraki-shi, Osaka (JP)**

(74) Representative: **Grünecker Patent- und
Rechtsanwälte
PartG mbB
Leopoldstraße 4
80802 München (DE)**

(54) **PRESSURE-SENSITIVE ADHESIVE TAPE OR SHEET FOR AFFIXATION TO CLOTHING**

(57)     The present invention relates to a pressure-sensitive adhesive tape or sheet for affixation to clothing, which includes a pressure-sensitive adhesive layer provided on one side of a fabric substrate. The pressure-sensitive adhesive layer contains an acrylic-based copolymer and an ingredient in a liquid or pasty state at room temperature. The percentage elongation of the pressure-sensitive adhesive tape or sheet for affixation to clothing is from 10% to 300% in the maximum elongation direction under a load condition of 4.9 N/25-mm-width, and the residual distortion factor of the pressure-sensitive adhesive tape or sheet for affixation to clothing after removal of the load is 50% or below.

EP 3 275 959 A1

**Description**

FIELD OF THE INVENTION

The present invention relates to a pressure-sensitive adhesive tape or sheet for affixation to clothing, which is used by attaching on clothing.

BACKGROUND OF THE INVENTION

For the purpose of attaching a cloth-like base fabric to clothing, there has generally been adopted a method of fixing them together by sewing them together with a thread or the like, or a method of coating in advance the back side of a base fabric with a hot-melt adhesive material and fixing the base fabric to clothing through the adhesion by heating with an iron or the like. However, in the case of fixing a base fabric to clothing by the use of such methods, there occurs a problem that, when removal of the base fabric from the clothing is desired, the base fabric cannot easily be removed from the clothing. On the other hand, as a method of fixing temporarily for the purpose of easy removal, there has been a method of fixing through the use of hooks attached to the corners or periphery of a base fabric, or a method of fixing temporarily by fitting Magic Tape (registered trademark) on a base fabric. However, such methods require time and labor for attaching hooks or Magic Tape (registered trademark). Accordingly, a method which allows a base fabric to be more simply and easily affixed to and removed from clothing has been desired.

Under these circumstances, as a method of attaching a base fabric to clothing, there has been disclosed a seal or the like which is formed using a printing fabric characterized in that an adhesive layer and a release paper are provided in order of mention on the back side of the printing fabric and the adhesive layer remains on the fabric side when the release paper is peeled away (Patent Document 1). Of the seal satisfying the foregoing request, it is required that the seal be stuck on clothing without peeling off during affixation of the seal to clothing on one hand but on the other hand, at the time of peeling, the seal not only allow minimization of damage to the clothing as an adherend, including fluffing and so on, but also be neatly peeled away without leaving an adhesive residue or the like on the clothing. As mentioned above, both properties of well sticking on and releasing from clothing become necessary, but materials fully satisfying such properties have not been found yet.

[Patent Document 1] JP-A-2009-75227

SUMMARY OF THE IVENTION

In light of the foregoing situation, the invention aims to provide a pressure-sensitive adhesive tape or sheet which is used for affixation to clothing and has good adhesiveness to clothing on one hand but on the other hand, when removed from clothing by peeling, can be neatly peeled away from the clothing while minimizing damage to the clothing, including fluffing and so on, and that without leaving an adhesive residue or the like on the clothing.

The present inventors have made an intensive study in order to achieve the foregoing aim, and have found that, by providing a pressure-sensitive adhesive tape or sheet for affixation to clothing with a pressure-sensitive adhesive layer containing an acrylic-based copolymer and an ingredient in a liquid or pasty state at room temperature, what's more by imparting specific elasticity to the pressure-sensitive adhesive tape or sheet for affixation to clothing, the tape or sheet can gain excellence in both stickability on and peelability from clothing, thereby completing the invention.

Namely, the invention relates to a pressure-sensitive adhesive tape or sheet for affixation to clothing, which comprises a pressure-sensitive adhesive layer provided on one side of a fabric substrate,

wherein the pressure-sensitive adhesive layer contains an acrylic-based copolymer and an ingredient in a liquid or pasty state at room temperature,

wherein a percentage elongation of the pressure-sensitive adhesive tape or sheet for affixation to clothing is from 10% to 300% in the maximum elongation direction under a load condition of 4.9 N/25-mm-width, and a residual distortion factor of the pressure-sensitive adhesive tape or sheet for affixation to clothing after removal of the load is 50% or below.

According to the invention, the pressure-sensitive adhesive tape or sheet for affixation to clothing not only has excellent stickability on clothing but also, at the time of removal thereof, allows both reduction in damage to clothing, including fluffing and so on, and control of occurrence of an adhesive residue. In addition, under sticking on clothing, the pressure-sensitive adhesive tape or sheet has followability to twisting in clothing as well as expansion and contraction of clothing, and besides, at the time of peeling away from the clothing, the pressure-sensitive adhesive tape or sheet is peeled away along the direction low in elasticity, and thereby it can be easily peeled away from the clothing without attended by too much elongation. Namely, the pressure-sensitive adhesive tape or sheet can be attached and released easily and cleanly. Further, after it is peeled away from clothing, the pressure-sensitive adhesive tape or sheet can also be used repeatedly.

DETAILED DESCRIPTION OF THE INVENTION

(Percentage Elongation)

The pressure-sensitive adhesive tape or sheet for affixation to clothing (hereafter abbreviated as "the pressure-sensitive adhesive tape or sheet" in some cases) is required to have a percentage elongation of 10% to 300% in the maximum elongation direction under a load condition of 4.9 N/25-mm-width, and the percentage elongation of the pressure-sensitive adhesive tape or sheet is preferably from 20% to 250%, more preferably from 30% to 200%, in the maximum elongation direction under the above-specified load condition. The term maximum elongation direction as used herein refers to the direction in which the percentage elongation is the highest. When the percentage elongation is lower than 10%, under a state of sticking on clothing, a pressure-sensitive adhesive tape or sheet suffers from lowering of followability to twisting in and stretching of the clothing, and hence it cannot attain the working effect of the invention. On the other hand, when a pressure-sensitive adhesive tape or sheet for affixation to clothing has a percentage elongation higher than 300%, there is a fear of causing damages to clothing, including fluffing and so on, at the time of peeling away and removing from the clothing, and besides there is a fear of leaving an adhesive residue on the clothing, and hence such a pressure-sensitive adhesive tape or sheet also cannot attain the working effect of the invention.
A residual distortion factor of the pressure-sensitive adhesive tape or sheet after removal of the above-specified load is required to be 50% or below, and the value thereof is preferably 40% or below, more preferably 30% or below. The term residual distortion factor as used herein refers to the value worked out by the following expression.

$$\text{Residual distortion factor} = (\text{percentage elongation after removal of}$$

$$\text{load/percentage elongation under load condition}) \times 100\ (\%)$$

When the residual distortion factor is greater than 50%, there is a fear of seriously deforming the shape of a pressure-sensitive adhesive tape or sheet through twisting in and expansion-and-contraction of clothing on which the pressure-sensitive adhesive tape or sheet is stuck, resulting in no recovery to the original shape.

(Fabric Substrate)

The fabric substrate which is a constituent member of the pressure-sensitive adhesive tape or sheet for affixation to clothing has no particular restrictions so long as it can support a pressure-sensitive adhesive layer mentioned later and can follow expansion and contraction of the tape or sheet. However, in the case of sticking the pressure-sensitive adhesive tape or sheet on clothing, it is appropriate to use a fabric substrate having high moisture permeability for the purpose of preventing stuffiness of the skin portion in intimate contact with the clothing and promoting quick drying of the clothing when the clothing is wetted with sweat, received water or the like.
Examples of such a fabric substrate include fabric substrates formed from polyester such as polyethylene terephthalate (PET), polyurethane, nylon, vinylon, polyethylene, polypropylene and cotton. These materials may be used alone or as a combination of any two or more thereof, formed into woven fabrics or knitted fabrics and then put to use. By forming it into woven fabric or knitted fabric, such a fabric substrate in itself comes to possess high elasticity, and hence the pressure-sensitive adhesive tape or sheet using such a woven or knitted fabric substrate allows attainment of the foregoing percentage elongation and residual distortion factor.
Additionally, even when a fabric substrate made from e.g. polyester or polyurethane is used by itself, it is appropriate for the substrate to be formed into woven fabric, knitted fabric, net or the like. By doing so, as in the foregoing case, the fabric substrate in itself comes to possess high elasticity, and hence the pressure-sensitive adhesive tape or sheet using such a fabric substrate allows the foregoing percentage elongation and residual distortion factor to be achieved.
Further, it is also possible to form fabric substrates made from e.g. polyester and polyurethane into a fabric substrate having a laminated structure of e.g. polyester and polyurethane layers.
The thickness of a fabric substrate has no particular limits, and it can be determined appropriately depending on e.g. the application purpose of the pressure-sensitive adhesive tape or sheet, or the kind and strength of clothing to which the pressure-sensitive adhesive tape or sheet is affixed. In consideration of e.g. stickability of the pressure-sensitive adhesive tape or sheet on clothing, it is appropriate for the thickness of a fabric substrate to be from 0.05 mm to 5.0 mm, preferably from 0.1 mm to 4.5 mm. By the way, when the thickness is difficult to measure, it is appropriate for the fabric substrate to have its weight per unit area in a range of 20 g/m$^2$ to 1,000 g/m$^2$, preferably in a range of 50 g/m$^2$ to 500 g/m$^2$.

(Pressure-Sensitive Adhesive Layer)

The pressure-sensitive adhesive layer as a constituent member of the pressure-sensitive adhesive tape or sheet for affixation to clothing is a layer containing an acrylic-based copolymer and an ingredient in a liquid or pasty state at room temperature on the grounds of easiness of adjustment in adhesion between the pressure-sensitive adhesive tape or sheet and clothing, less stimulus to skin on the occasion of contact with skin, and so on.

The acrylic-based copolymer has no particular restrictions, but it is appropriate to use an acrylic-based copolymer produced from a monomer mixture containing e.g. a (meth)acrylic acid alkyl ester monomer and an alkoxy group-containing ethylenic unsaturated monomer.

A (meth)acrylic acid alkyl ester monomer becomes a main ingredient for imparting good stickability on clothing to a pressure-sensitive adhesive layer, and it is especially effective to use the monomer whose alkyl group is at least 6 in carbon number, preferably a long-chain alkyl group containing 6 to 18 carbon atoms. Additionally, (meth)acrylic acid alkyl ester monomers are advantageous in that they are relatively weak in stimulus and resist causing reduction in adhesion by long-duration use.

Examples of such a (meth)acrylic acid alkyl ester monomer include butyl ester, propyl ester, octyl ester, nonyl ester, decyl ester, dodecyl ester and lauryl ester of acrylic acid or methacrylic acid. These esters may be used alone, or as combinations of two or more thereof. By the way, it is needless to say that alkyl ester chains in these monomers may be either straight chains or branched chains.

The alkoxy group-containing ethylenic unsaturated monomer is an ingredient for imparting water-vapor permeability, or the so-called moisture permeability, to an acrylic-based copolymer. The alkoxy group-containing ethylenic unsaturated monomer having such an action is not limited to particular ones, but it is appropriate to use e.g. an alkoxyalkyl acrylate having a 1-4C alkoxy group, with examples including methoxypolyethylene acrylate, ethoxydiethylene glycol acrylate, butoxydiethylene glycol acrylate, methoxyethyl acrylate, ethoxyethyl acrylate and butoxyethyl acrylate.

Alternatively, as the acrylic-based copolymer in the invention, it is also appropriate to use an acrylic-based copolymer produced from a monomer mixture further containing a carboxyl group-containing ethylenic unsaturated monomer. By containing a carboxyl group-containing ethylenic unsaturated monomer, the copolymer obtained increases in cohesive force, and therefore this additional monomer becomes an important monomer in point of adjustment to properties of the pressure-sensitive adhesive layer. Representative examples of such a monomer include acrylic acid, itaconic acid, crotonic acid, fumaric acid and maleic acid (anhydride). Of these acids, acrylic acid is preferred over the others from the viewpoints of copolymerizability and handling ease.

One which is suitable as the acrylic-based copolymer is a copolymerization product of the foregoing two kinds of monomers, namely a (meth)acrylic acid alkyl ester monomer and an alkoxy group-containing ethylenic unsaturated monomer, and one which is more suitable as the acrylic-based copolymer is a copolymerization product of the foregoing three kinds of monomers, namely a (meth)acrylic acid alkyl ester monomer, an alkoxy group-containing ethylenic unsaturated monomer and a carboxyl group-containing ethylenic unsaturated monomer.

The acrylic-based copolymer may be a copolymer produced by copolymerizing monomers for making various modifications, e.g. for imparting hydrophilicity, as appropriate in addition to the above-recited monomers. Examples of a monomer for making modification include styrene, vinyl acetate and N-vinyl-2-pyrrolidone.

It is appropriate that the content of a (meth)acrylic acid alkyl ester monomer in the acrylic-based copolymer be from 40 mass% to 80 mass%, preferably from 50 mass% to 75 mass%. When the content of a (meth)acrylic acid alkyl ester monomer is in the above-specified range, the copolymer shows good stickability on clothing and, at the time of peeling from the clothing, it does not cause a phenomenon that an adhesive residue is left on the clothing, and ensures excellent peelability.

On the other hand, it is appropriate that the content of an alkoxy group-containing ethylenic unsaturated monomer be from 10 mass% to 60 mass%, preferably from 20 mass% to 50 mass%. When the content of an alkoxy group-containing ethylenic unsaturated monomer is in the above-specified range, the resulting copolymer can impart excellent moisture permeability to the pressure-sensitive adhesive layer.

In the case of additionally incorporating a carboxyl group-containing ethylenic unsaturated monomer, it is appropriate that the alkoxy group-containing ethylenic unsaturated monomer content be adjusted to fall within a range of 10 mass% to 50 mass%, preferably 20 mass% to 45 mass%.

It is appropriate that the content of a carboxyl group-containing ethylenic unsaturated monomer be adjusted to fall within a range of 1 mass% to 10 mass%, preferably 3 mass% to 8 mass%. When the content of a carboxyl group-containing ethylenic unsaturated monomer is in the above-specified range, the resulting copolymer can impart excellent cohesive force to the pressure-sensitive adhesive layer, and the adhesive residue phenomenon and the like can be controlled.

it is appropriate that, in the portion dissolved in a solvent for molecular-weight measurement, the acrylic-based copolymer be adjusted to have a weight-average molecular weight in a range of a half a million to a million (500,000 to 1,000,000), preferably about six hundred thousand to about nine hundred thousand (600,000 to 900,000), a number-average molecular weight in a range of thirty thousand to one hundred ninety thousand (30,000 to 190,000), and a molecular weight distribution in a range of 3 to 22, preferably about 8 to about 15.

By the way, the weight-average molecular weight and the molecular weight distribution as mentioned above are values determined using gel permeation chromatography (GPC), and a sample for measurement is dissolved in tetrahydrofuran, and the soluble portion having passed through a 0.45-$\mu$m$\phi$ membrane filter is subjected to GPC measurement and those values are calculated in terms of polystyrene.

The ingredient which is a constituent of the pressure-sensitive adhesive layer and is in a liquid or pasty state at room temperature (25°C) has an action of imparting flexibility to the pressure-sensitive adhesive layer. Under sticking on clothing, the pressure-sensitive adhesive tape or sheet for affixation to clothing that contains an ingredient in a liquid or pasty state at room temperature can follow twisting in the clothing as well as expansion and contraction of the clothing owing to the pressure-sensitive adhesive layer having flexibility. In addition, at the time when the pressure-sensitive adhesive tape or sheet in a state of being stuck on clothing is peeled away from the clothing, the pressure-sensitive adhesive tape or sheet not only minimize damage to the clothing, such as fluffing, but also can be neatly peeled away from the clothing without leaving an adhesive residue and the like on the clothing. Further, the pressure-sensitive adhesive tape or sheet is highly effective in ensuring light peeling at the time of peeling from clothing in spite of retention of good stickability on the clothing under sticking on the clothing.

Such an ingredient in a liquid or pasty state at room temperature has no particular restrictions so long as it is compatible with acrylic-based copolymers. Examples of such an ingredient include esters produced from alkyl alcohols and acids, such as phthalic acid, maleic acid, adipic acid and various fatty acids including stearic acid, and esters produced from acids and polyhydric alcohols, such as ethylene glycol and glycerin. To be more specific, examples of a monohydric alcohol ester include dibutyl phthalate, di-2-ethylhexyl phthalate, dibutyl adipate, di-2-ethylhexyl sebacate, dibutyl maleate, ethyl myristate, isopropyl myristate, isopropyl palmitate, butyl stearate, isopropyl isostearate, hexyl laurate, cetyl lactate, myristyl lactate, diethyl phthalate, octyldodecyl myristate, octyldodecyl oleate, hexyldecyl dimethyloctanoate, cetyl 2-ethythexanoate, isocetyl 2-ethylhexanoate, stearyl 2-ethylhexanoate and dioctyl succinate. And examples of a dihydric or higher alcohol ester include propylene glycol dicaprylate, propylene glycol dicaprate, propylene glycol diisostearate, glyceryl monocaprylate, glyceryl tricaprylate, glyceryl tri-2-ethylhexanoate, glyceryl tricaprate, glyceryl trilaulate, glyceryl triisostearate, glyceryl trioleate and trimethylolpropane tri-2-ethylhexanoate. These esters can be used alone, or any two or more thereof can be used in combination. Such an ingredient as to be in a liquid or pasty state at room temperature can be chosen appropriately in response to other factors in the pressure-sensitive adhesive tape or sheet, but from the viewpoint of compatibility with acrylic-based copolymers, a carboxylic acid ester is suitably used, a fatty acid glyceryl ester is more suitably used, and a glycerin ester of a saturated fatty acid is still more suitably used.

Examples of a saturated fatty acid include caprylic acid, capric acid and 2-ethylhexanoic acid, and these acids can be used alone or two or more thereof can be used in combination. Because such an acid has no unsaturated double bond, the pressure-sensitive adhesive layer containing the ester of such an acid can be prevented from suffering oxidative deterioration.

In the case of using the above-recited caprylic acid or so on as a saturated fatty acid, triglyceryl caprylate, triglyceryl caprate or triglyceryl 2-ethylhexanoate is obtained as a carboxylic acid ester. Of these carboxylic acid esters, caprylic triglyceride is preferred over the others in point of compatibility with acrylic-based copolymers.

As to the content ratio between an acrylic-based copolymer and an ingredient in a liquid or pasty state at room temperature, it is appropriate that the ingredient content be from 20 to 100 parts by mass with respect to 100 parts by mass of an acrylic-based copolymer. When the ingredient has its content in the foregoing range, it can impart sufficient flexibility to the pressure-sensitive adhesive layer, and therefore the pressure-sensitive adhesive tape or sheet not only can have sufficient stickability on clothing, but also can ensure satisfactory peelability without doing damage to the clothing, such as fluffing, at the occasion of peeling from the clothing.

For the purpose of imparting a moderate cohesive force to the pressure-sensitive adhesive layer as a constituent member of the pressure-sensitive adhesive tape or sheet for affixation to clothing, it is appropriate for the pressure-sensitive adhesive layer to undergo crosslinking treatment. As the crosslinking treatment, there are physical crosslinking by the irradiation with ionizing radiation, such as electron beams, $\gamma$ rays or X rays, and chemical crosslinking by the use of a crosslinking agent, but from the viewpoints of treatability and good reproducibility in crosslinking, it is preferred that the pressure-sensitive adhesive layer be subjected to chemical crosslinking treatment using a crosslinking agent. For example, a crosslinking agent is added to a pressure-sensitive adhesive composition in which materials to form a pressure-sensitive adhesive layer are mixed and the pressure-sensitive adhesive layer formed from the composition is subjected to heat treatment to undergo crosslinking. Examples of such a crosslinking agent include crosslinking agents usable in giving crosslinking treatment, such as isocyanate-type crosslinking agents, peroxide-type crosslinking agents and metal chelate-type crosslinking agents.

The pressure-sensitive adhesive layer having undergone the crosslinking treatment as mentioned above keeps a proper balance between a moderate stickability on clothing and a cohesive force in the pressure-sensitive adhesive layer through the control of a crosslinking degree, and the molecular weight and molecular-weight distribution of the acrylic-based copolymer also exert an influence on adjustment to such a balance.

The pressure-sensitive adhesive layer thickness has no particular limits, and it can be chosen appropriately according to the usage of the pressure-sensitive adhesive tape or sheet for affixation to clothing, the kind and strength of clothing to which the pressure-sensitive adhesive tape or sheet is affixed, and so on. For instance, the thickness can be set on the order of 15 to 150 $\mu$m, and the range thereof may be narrowed to the order of 30 to 90 $\mu$m. By doing so, a moderate adhesion to clothing can be imparted to clothing.

For the purpose of preventing the pressure-sensitive adhesive layer surface from being contaminated, it is appropriate that the pressure-sensitive adhesive layer surface of the pressure-sensitive adhesive tape or sheet for affixation to clothing be covered with a release liner until the time comes when it is put to use. As such a release liner, those generally used for pressure-sensitive adhesive tapes can be used. To be more specific, a release liner usable herein is one which is formed by coating the surface of wood free paper, glassine paper, parchment paper or so on with a release agent having releasability, such as a silicone resin or a fluorocarbon resin, one which is formed by anchor-coating wood free paper with a resin, or one which is formed by coating the surface of a polyethylene-laminated thing with a release agent having releasability, such as a silicone resin or a fluorocarbon resin.

The pressure-sensitive adhesive tape or sheet for affixation to clothing may be subjected to printing of symbols, letters, graphics and the like on the fabric substrate's surface opposite to the surface on which the pressure-sensitive adhesive layer is formed. Such printing can be done using a conventional method, such as gravure printing, offset printing, screen printing or inkjet printing.

An example of a method of manufacturing the pressure-sensitive adhesive tape or sheet for affixation to clothing is illustrated below, but the invention should not be construed as being limited to this example in any way.

First, a monomer mixture including e.g. a (meth)acrylic acid alkyl ester monomer, an alkoxyl group-containing ethylenic unsaturated monomer, and optionally a carboxyl group-containing ethylenic unsaturated monomer, is subjected to copolymerization reaction according to general radical polymerization in an organic solvent to prepare an acrylic-based copolymer solution. Then, into the acrylic-based copolymer solution is mixed an ingredient in a liquid or pasty state at room temperature, such as a carboxylic acid ester, in an amount of 20 to 100 parts by mass with respect to 100 parts by mass of solids in the acrylic-based copolymer solution (acrylic-based copolymer) to prepare a pressure-sensitive adhesive composition solution.

Next, the pressure-sensitive adhesive solution thus obtained is applied to all over or part of the surface of a fabric substrate. When it is partially applied, the pressure-sensitive adhesive solution is preferably applied in the form of e.g. dots or streaks. As examples of a coating technique usable in the case of applying the solution in the form of streaks, mention may be made of linear coating and undulatory coating, but any coating technique may be adopted so long as spaces functioning as gas vent passages, namely spaces between streaks, are secured. The undulatory coating is preferable because the time-dependent change in the cross-sectional area of spaces between streaks is little under sticking on clothing. Further, for the purpose of ensuring air permeability, the pressure-sensitive adhesive tape or sheet may be subjected to punch processing to form pores therein.

Examples

The invention will now be illustrated in more detail by reference to examples, but these examples should not be construed as limiting the scope of the invention. Additionally, all parts and percentages in the following examples are parts by mass and mass%, respectively.

(Example 1)

A monomer mixture constituted of 65 parts of isononyl acrylate, 30 parts of 2-methoxyethyl acrylate and 5 parts of acrylic acid was homogeneously mixed and dissolved in ethyl acetate, and thereto was added 0.3 parts of azobisisobutyronitrile as a polymerization initiator, thereby inducing copolymerization reaction to produce an ethyl acetate solution of acrylic-based copolymer.

Into the thus produced ethyl acetate solution of acrylic-based copolymer, caprylic triglyceride and a trifunctional isocyanate compound as a crosslinking agent were mixed in amounts of 45 parts and 0.06 parts, respectively, with respect to 100 parts of acrylic-based copolymer, thereby preparing a homogeneous pressure-sensitive adhesive solution.

Then, the thus prepared solution was applied to the release-treated surface of a release liner, which had undergone on one side thereof release treatment with a silicone, so as to have a thickness of 62 $\mu$m after drying, thereby forming a pressure-sensitive adhesive solution layer. This pressure-sensitive adhesive solution layer in a not-yet-dried state was affixed to one side of a smooth fabric knitted out of polyester as a fabric substrate (material: PET, thickness: 0.5 mm, weight per unit area: 113 g/m$^2$) and subjected to crosslinking treatment by drying, and thereby a pressure-sensitive adhesive tape for affixation to clothing was obtained as Example 1.

(Example 2)

A pressure-sensitive adhesive tape for affixation to clothing was obtained as Example 2 in the same manner as in Example 1, except that the fabric substrate used was a fabric woven of cotton (material: cotton, thickness: 0.9 mm, weight per unit area: 280 g/m$^2$).

(Comparative Example 1)

A pressure-sensitive adhesive tape for affixation to clothing was obtained as Comparative Example 1 in the same manner as in Example 1, except that the fabric substrate used was a spun lace nonwoven fabric of polyester (material: PET, thickness: 0.37 mm, weight per unit area: 44 g/m$^2$).

(Comparative Example 2)

A monomer mixture constituted of 95 parts of 2-ethylhexyl acrylate and 5 parts of acrylic acid was homogeneously mixed and dissolved in ethyl acetate, and thereto was added 0.3 parts of benzoyl peroxide as a polymerization initiator, thereby inducing copolymerization reaction to produce an ethyl acetate solution of acrylic-based copolymer.
The thus produced acetyl acetate solution of acrylic-based copolymer was applied to the release-treated surface of a release liner, which had undergone on one side thereof release treatment using a silicone, so as to have a thickness of 80 $\mu$m after drying, thereby forming a pressure-sensitive adhesive solution layer. This pressure-sensitive adhesive solution layer in a not-yet-dried state was affixed to one side of a fabric woven of cotton as a fabric substrate (material: cotton, thickness: 0.9 mm, weight per unit area: 280 g/m$^2$) and dried, thereby giving a pressure-sensitive adhesive tape for affixation to clothing as Comparative Example 2.

(Comparative Example 3)

Into the same ethyl acetate solution of acrylic-based copolymer as produced in Comparative Example 2, sorbitan trioleate was mixed in an amount of 66 parts with respect to 100 parts of acrylic-based copolymer to prepare a homogeneous pressure-sensitive adhesive solution.
Then, the thus prepared solution was applied to the release-treated surface of a release liner, which had undergone on one side thereof release treatment using a silicone, so as to have a thickness of 55 $\mu$m after drying, and dried to form a pressure-sensitive adhesive layer. Subsequently thereto, the thus formed pressure-sensitive adhesive layer was transferred and affixed to one side of polyester film (thickness: 25 $\mu$m), thereby giving a pressure-sensitive adhesive tape for affixation to clothing as Comparative Example 3.
The following tests were performed on each individual pressure-sensitive adhesive tape for affixation to clothing, which was formed in each of the foregoing Examples and Comparative Examples, and results obtained are shown in Table 1 and Table 2.

(Adhesive Force)

An adherend (a fabric knitted out of 100% polyester) was fixed to a Bakelite plate via double-faced tape. After the release liner was peeled away from each Example material or each Comparative Example material cut out in the form of a rectangle measuring 20 mm (W) by 100 mm (L) (test piece), the surface of the pressure-sensitive adhesive layer was affixed to and pressed against the adherend by moving thereon a 2-kg rubber roller forwardly and backwardly for once. In this condition, each Example material or each Comparative Example material was allowed to stand for 30 minutes at a temperature of 23°C and a humidity of 50% RH, and then peeled away in the direction of 90 degrees at a peeling speed of 300 mm/minute by means of a tensile testing machine. Peeling forces at this time were measured. The mean value of peeling forces measured at 5 points was worked out and defined as an adhesive force.

(Percentage Elongation and Residual Distortion Factor)

Each of the Example materials and the Comparative Example materials was cut out in the form of a rectangle measuring 25 mm (W) by 50 mm (L) so that the maximum elongation direction thereof agreed with the length direction, and thereby formed into a test piece. A 30 mm-long standard line was ruled with a marker in the length direction of each test piece, the release liner was peeled away, and then one end of the test piece was fixed to a frame for constant-load testing and from the other end a load of 0.5 kg (4.9 N) was dangled for 3 minutes. The length of the standard line (L mm) after the 3 minutes was measured with a square, and a percentage elongation was calculated from the following expression.

$$\text{Percentage elongation} = (L - 30)/30 \times 100 \ (\%)$$

Next, the load of 0.5 kg (4.9 N) was removed, the length of the standard line (M mm) was measured with the square, and then a percentage elongation after removal of the load was calculated from the following expression.

$$\text{Percentage elongation after removal of load} =$$

$$(M - 30)/30 \times 100 \ (\%)$$

Further, a residual distortion factor was calculated from the foregoing percentage elongation and the percentage elongation after removal of the load in accordance with the following expression.

$$\text{Residual distortion factor} = \text{Percentage elongation} \quad \text{after} \quad \text{removal} \quad \text{of}$$

$$\text{load/percentage elongation} \times 100 \ (\%)$$

(Stickability Evaluation and Shape Stability Evaluation)

The pressure-sensitive adhesive layer surface of a test piece prepared by cutting out each of the Example materials and the Comparative Example materials in the form of a square measuring 50 mm by 50 mm and removing therefrom the release liner was stuck on and pressed against each of two kinds of adherends (fabrics knitted out of 100% polyester and 100% cotton) cut out in the form of a square measuring 150 mm by 150 mm by a 2-kg rubber roller being moved on the pressure-sensitive adhesive layer surface forwardly and backwardly for once. One end of the resulting adherend was fixed to a frame for constant-load testing, and from the other end was dangled a load of 1.5 kg (14.7 N) for 3 minutes. The peeled condition and the shape of each adherend after the 3 minutes were visually observed.

Stickability Evaluation

good: No peeling
bad : Getting unstuck in the end portion

Shape Stability

Good: Recovery to original shape
Bad : No recovery to original shape

(Evaluation of Fluffing and Adhesive Residue at the time of Peeling)

The pressure-sensitive adhesive layer surface of a test piece prepared by cutting out each of the Example materials and the Comparative Example materials in the form of a square measuring 50 mm by 50 mm and removing therefrom the release liner was stuck on and pressed against each of two kinds of adherends (fabrics knitted out of 100% polyester and 100% cotton) cut out in the form of a square measuring 150 mm by 150 mm by moving thereon a 2-kg rubber roller forwardly and backwardly for once, and then allowed to stand for 3 hours at a temperature of 23°C and a humidity of 50% RI-I. Thereafter, the test piece was peeled away from the adherend. Each adherend after peeling of each test piece was examined by visual observation for the fluffing condition and the presence or absence of an adhesive residue.

Good: Neither fluffing nor adhesive residue was found

Bad: Either fluffing or adhesive residue was found

Table 1

| | Percentage elongation [%] | Percentage elongation after Removal of Load [%] | Residual Distortion Factor [%] |
|---|---|---|---|
| Example 1 | 171 | 27 | 15.8 |
| Example 2 | 49 | 6 | 12.2 |
| Comparative Example 1 | 152 | 132 | 86.8 |
| Comparative Example 2 | 49 | 8 | 16.3 |
| Comparative Example 3 | 0 | 0 | - |

Table 2

| | Adhesive Force [N/20mm] | Stickability | | Shape Stability | Fluffing and Adhesive Residue | | Comprehensive Evaluation |
|---|---|---|---|---|---|---|---|
| | | 100% Polyester | 100% Cotton | | 100% Polyester | 100% Cotton | |
| Example 1 | 1.42 | Good | Good | Good | Good | Good | Good |
| Example 2 | 1.78 | Good | Good | Good | Good | Good | Good |
| Comparative Example 1 | 1.85 | Good | Good | Bad | Good | Good | Bad |
| Comparative Example 2 | 2.56 | Good | Good | Good | Good | Bad | Bad |
| Comparative Example 3 | 1.79 | Bad | Bad | Good | Good | Good | Bad |

Despite of their good stickability under sticking on the adherends, the Example materials were low in adhesive force at the time of peeling, left no adhesive residue, and slightly fluffed and caused little damage to clothes as the adherends, or equivalently they had satisfactory quality. In addition, the Example materials were susceptible to a change in shape at the time of sticking on the adherends and easily recovered to their original shapes.

The Comparative Example 1 material resisted recovering to its original shape after undergoing a shape change by sticking on adherends. The Comparative Example 2 material easily caused fluffing when the adherend was cotton stuff in particular. The Comparative Example 3 material was low in percentage elongation, and it therefore failed to follow the expansion and contraction of the adherend, and the end portion thereof got unstuck at the time of sticking on the adherend, or equivalently it was inferior in stickability.

In the foregoing, the invention has been illustrated in detail on the basis of the above-described Examples. However, the invention should not be construed as being limited to these examples, and various changes and modifications can be made without departing from the spirit and scope of the invention.

While the invention has been described in detail and with reference to specific embodiments thereof, it will be apparent to one skilled in the art that various changes and modifications can be made therein without departing from the scope thereof.

This application is based on Japanese patent application No. 2016-148907 filed July 28, 2016, the entire contents thereof being hereby incorporated by reference.

**Claims**

1. A pressure-sensitive adhesive tape or sheet for affixation to clothing, which comprises a pressure-sensitive adhesive layer provided on one side of a fabric substrate,

wherein the pressure-sensitive adhesive layer contains an acrylic-based copolymer and an ingredient in a liquid or pasty state at room temperature,

wherein a percentage elongation of the pressure-sensitive adhesive tape or sheet for affixation to clothing is from 10% to 300% in the maximum elongation direction under a load condition of 4.9 N/25-mm-width, and a residual distortion factor of the pressure-sensitive adhesive tape or sheet for affixation to clothing after removal of the load is 50% or below.

2. The pressure-sensitive adhesive tape or sheet for affixation to clothing as described in claim 1, wherein the ingredient in a liquid or pasty state at room temperature is a carboxylic acid ester.

3. The pressure-sensitive adhesive tape or sheet for affixation to clothing as described in claim 2, wherein the carboxylic acid ester is a glycerin ester of a saturated fatty acid.

4. The pressure-sensitive adhesive tape or sheet for affixation to clothing as described in claim 3, wherein the saturated fatty acid is at least one selected from the group consisting of caprylic acid, capric acid and 2-ethylhexanoic acid.

5. The pressure-sensitive adhesive tape or sheet for affixation to clothing as described in claim 3, wherein the carboxylic acid ester is at least one selected from the group consisting of triglyceryl caprylate, triglyceryl caprate and triglyceryl 2-ethylhexanoate.

6. The pressure-sensitive adhesive tape or sheet for affixation to clothing as described in any one of claims I to 5, wherein the acrylic-based copolymer contains an acrylic-based copolymer produced from a monomer mixture comprising a (meth)acrylic acid alkyl ester monomer and an alkoxy group-containing ethylenic unsaturated monomer.

7. The pressure-sensitive adhesive tape or sheet for affixation to clothing as described in any one of claims 1 to 6, wherein the ingredient in a liquid or pasty state at room temperature is incorporated in an amount of 20 to 100 parts by mass with respect to 100 parts by mass of the acrylic-based copolymer.

8. The pressure-sensitive adhesive tape or sheet for affixation to clothing as described in any one of claims 1 to 7, wherein a material forming the fabric substrate is at least one selected from the group consisting of polyester, polyurethane, nylon, vinylon, polyethylene, polypropylene and cotton.

Europäisches Patentamt

European Patent Office

Office européen des brevets

**EUROPEAN SEARCH REPORT**

Application Number

EP 17 18 3502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 168 608 A1 (NITTO DENKO CORP [JP]) 31 March 2010 (2010-03-31) * paragraph [0033]; claim 1; examples 1-5 * | 1-8 | INV. C09J11/06 |
| X | EP 2 921 540 A1 (NITTO DENKO CORP [JP]) 23 September 2015 (2015-09-23) * paragraph [0028]; claims 1-4; examples 1-3 * | 1-8 | |
| X | EP 1 184 039 A2 (NITTO DENKO CORP [JP]) 6 March 2002 (2002-03-06) * claims 1-17; examples 1-8 * | 1-8 | |
| X | JP 2005 304756 A (NITTO DENKO CORP) 4 November 2005 (2005-11-04) * claims 1-3; examples 1,2 * | 1-8 | |

TECHNICAL FIELDS SEARCHED (IPC)

C09J

The present search report has been drawn up for all claims

| Place of search | Date of completion of the search | Examiner |
|---|---|---|
| Munich | 22 November 2017 | Sperry, Pascal |

## ANNEX TO THE EUROPEAN SEARCH REPORT
## ON EUROPEAN PATENT APPLICATION NO.

EP 17 18 3502

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2017

| Patent document cited in search report | | | Publication date | Patent family member(s) | | | Publication date |
|---|---|---|---|---|---|---|---|
| EP 2168608 | A1 | 31-03-2010 | | CA | 2680956 | A1 | 30-03-2010 |
| | | | | CN | 101711889 | A | 26-05-2010 |
| | | | | EP | 2168608 | A1 | 31-03-2010 |
| | | | | ES | 2529464 | T3 | 20-02-2015 |
| | | | | JP | 2010082102 | A | 15-04-2010 |
| | | | | KR | 20100037011 | A | 08-04-2010 |
| | | | | PT | 2168608 | E | 09-04-2015 |
| | | | | TW | 201021857 | A | 16-06-2010 |
| | | | | US | 2010081982 | A1 | 01-04-2010 |
| EP 2921540 | A1 | 23-09-2015 | | AU | 2015201423 | A1 | 08-10-2015 |
| | | | | CN | 104922721 | A | 23-09-2015 |
| | | | | EP | 2921540 | A1 | 23-09-2015 |
| | | | | JP | 2015173948 | A | 05-10-2015 |
| | | | | KR | 20150108771 | A | 30-09-2015 |
| | | | | TW | 201538674 | A | 16-10-2015 |
| | | | | US | 2015265742 | A1 | 24-09-2015 |
| EP 1184039 | A2 | 06-03-2002 | | AT | 307178 | T | 15-11-2005 |
| | | | | CA | 2356468 | A1 | 01-03-2002 |
| | | | | DE | 60114108 | T2 | 20-07-2006 |
| | | | | DK | 1184039 | T3 | 07-11-2005 |
| | | | | EP | 1184039 | A2 | 06-03-2002 |
| | | | | ES | 2246971 | T3 | 01-03-2006 |
| | | | | KR | 20020018593 | A | 08-03-2002 |
| | | | | US | 2002061948 | A1 | 23-05-2002 |
| JP 2005304756 | A | 04-11-2005 | | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009075227 A

- JP 2016148907 A